# EUROPEAN PATENT APPLICATION

(11) **EP 4 528 997 A1**
(43) Date of publication of application: **26.03.2025**
(21) Application number: 23807805.9
(22) Date of filing: 25.04.2023
(51) Int. Cl.: H02K 11/215, H02K 1/28, H02K 1/278, H02K 5/16

(54) **MOTOR**

(30) Priority: 18.05.2022 KR 20220060539
(71) Applicant: LG INNOTEK CO. LTD, Gangseo-gu Seoul 07796 (KR)
(72) Inventor: OH, Sung Joo, Seoul 07796 (KR)
(74) Representative: DREISS Patentanwälte PartG mbB
(86) International application number: PCT/KR2023/005616
(87) International publication number: WO 2023/224282

(57) **Abstract**

A motor comprises: a housing; a stator disposed inside the housing; a rotor disposed inside the stator; a shaft coupled to the center of the rotor; and a sensor magnet disposed outside the shaft, wherein a groove, in which the sensor magnet is disposed, is formed on one surface of the rotor.

## Description

### [Technical Field]

The present embodiment relates to a motor.

### [Background Art]

A motor is a device that converts an electrical energy into a rotational energy by using the force a conductor receives in a magnetic field. Recently, as the uses of motors have expanded, the role of motors has become more important. In particular, as the electrification of automobiles progresses rapidly, the demand for motors being applied to steering systems, braking systems, and design systems is increasing significantly.

The motor includes a housing, a stator being disposed inside the housing, and a rotor being disposed inside the stator, and is a device that generates rotational motion by electromagnetic interaction between the stator and the rotor. Specifically, a coil is wound on the stator, and a magnet facing the coil is disposed on the rotor, so that the rotor can rotate by the action of the coil and magnet.

In addition, the motor includes a sensor magnet and a sensor to detect the rotational position of the rotor or rotation shaft. For example, a sensor magnet is disposed on one surface of the rotor, and a sensor is disposed in a housing facing the sensor magnet, and the sensor detects the magnetic field of the sensor magnet to detect the position of the rotor or shaft.

However, according to the prior art, there is a problem that the overall size of the motor increases due to the structure in which the rotor, sensor magnet, and sensor are disposed in an axial direction.

### [Detailed Description of the Invention]

### [Technical Subject]

The present embodiment is intended to provide a motor that can be miniaturized by improving its structure.

### [Technical Solution]

A motor according to the present embodiment comprises: a housing; a stator being disposed inside the housing; a rotor being disposed inside the stator; a shaft being coupled to the center of the rotor; and a sensor magnet being disposed outside the shaft, wherein a groove in which the sensor magnet is disposed is formed on one surface of the rotor.

It may include a bearing being disposed to face one surface of the rotor and supporting the rotation of the shaft.

The rotor includes a rotor core and a magnet being disposed on an outer surface of the rotor core, wherein the groove may be formed on one surface of the rotor core facing the bearing.

With respect to an axial direction, the length between the sensor magnet and the bearing may be longer than the length between the rotor core and the bearing.

With respect to a radial direction, at least a portion of the rotor core may be disposed to be overlapped with the sensor magnet.

With respect to an axial direction, the length of the groove may be 1/2 or less than the length of the rotor core.

The sensor magnet includes one surface facing the bearing and the other surface facing the one surface, wherein the other surface of the magnet may be in contact with the bottom surface of the groove.

It includes a sensor plate in which the shaft is coupled to the center thereof and the sensor magnet is disposed on one surface facing the bearing, wherein the sensor plate may be disposed inside the groove.

The sensor plate includes: a first region being disposed outside the shaft; and a second region being extended outward in a radial direction from one end of the first region and perpendicular to the first region, wherein the sensor magnet may be disposed on a surface of the second region.

The surface of the second region facing the bearing and the surface of the sensor magnet may form the same plane.

### [Advantageous Effects]

Through the present embodiment, since the length in an axial direction of a motor can be reduced by forming an arrangement region of a sensor magnet through a groove of a rotor core, there is an advantage that enables miniaturization of a motor.

In addition, since the length of a shaft is also reduced compared to the prior art and volume reduction is accomplished due to the forming of a groove, there are advantages that material cost is reduced and weight reduction is accomplished compared to the prior art.

In addition, since it is a structure in which a sensor plate is supported by being in contact with the bottom surface of a groove, there is an advantage of improved assemblability.

### [Brief Description of Drawings]

FIG. 1 is a perspective view illustrating an outer appearance of a motor according to an embodiment of the present invention.
FIG. 2 is a cross-sectional view of a motor according to an embodiment of the present invention.
FIG. 3 is an exploded perspective view of a motor according to an embodiment of the present invention.
FIG. 4 is a perspective view of a rotor according to an embodiment of the present invention.
FIG. 5 is an exploded perspective view of a rotor according to an embodiment of the present invention.
FIG. 6 is a cross-sectional view of a rotor according to an embodiment of the present invention.
FIGS. 7 to 9 are diagrams illustrating a modified embodiment of a rotor and a sensor magnet according to an embodiment of the present invention.

### [BEST MODE]

Hereinafter, preferred embodiments of the present invention will be described in detail with reference to the accompanying drawings.

However, the technical idea of the present invention is not limited to some embodiments to be described, but may be implemented in various forms, and inside the scope of the technical idea of the present invention, one or more of the constituent elements may be selectively combined or substituted between embodiments.

In addition, the terms (including technical and scientific terms) used in the embodiments of the present invention, unless explicitly defined and described, can be interpreted as a meaning that can be generally understood by a person skilled in the art, and commonly used terms such as terms defined in the dictionary may be interpreted in consideration of the meaning of the context of the related technology.

In addition, terms used in the present specification are for describing embodiments and are not intended to limit the present invention. In the present specification, the singular form may include the plural form unless specifically stated in the phrase, and when described as "at least one (or more than one) of A and B and C", it may include one or more of all combinations that can be combined with A, B, and C.

In addition, in describing the components of the embodiment of the present invention, terms such as first, second, A, B, (a), and (b) may be used.

These terms are merely intended to distinguish the components from other components, and the terms do not limit the nature, order or sequence of the components.

And, when a component is described as being 'connected', 'coupled' or 'interconnected' to another component, the component is not only directly connected, coupled or interconnected to the other component, but may also include cases of being 'connected', 'coupled', or 'interconnected' due that another component between that other components.

In addition, when described as being formed or disposed in "on (above)" or "below (under)" of each component, "on (above)" or "below (under)" means that it includes not only the case where the two components are directly in contact with, but also the case where one or more other components are formed or disposed between the two components. In addition, when expressed as "on (above)" or "below (under)", the meaning of not only an upward direction but also a downward direction based on one component may be included.

The 'axial direction' used hereinafter may be a lengthwise direction of the shaft.

The 'radial direction' used hereinafter may be a direction perpendicular to the 'axial direction'.

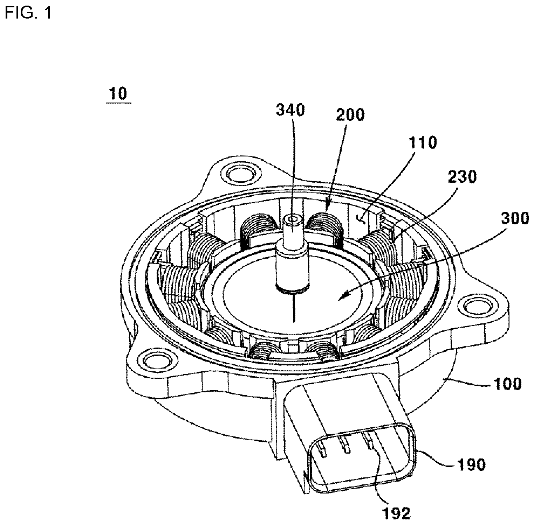

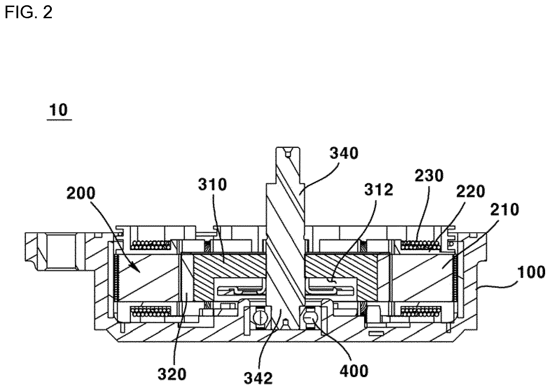

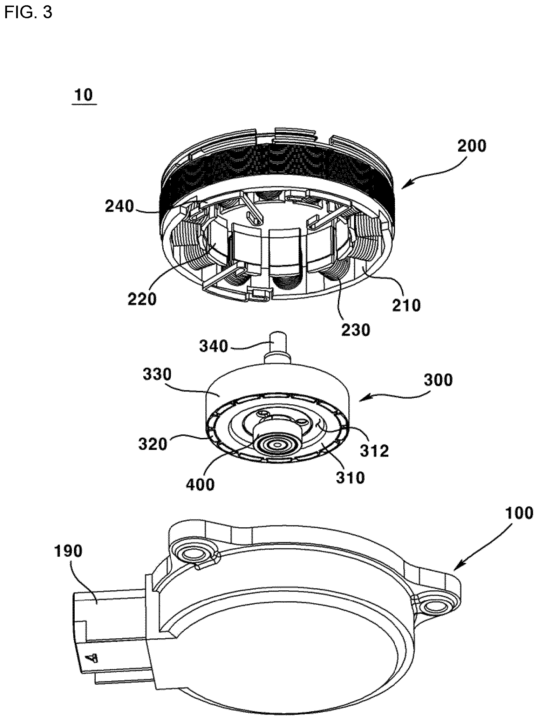

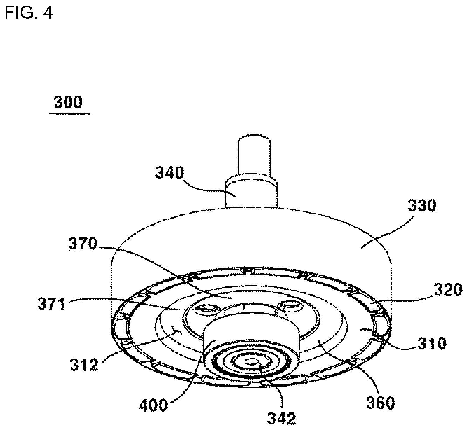

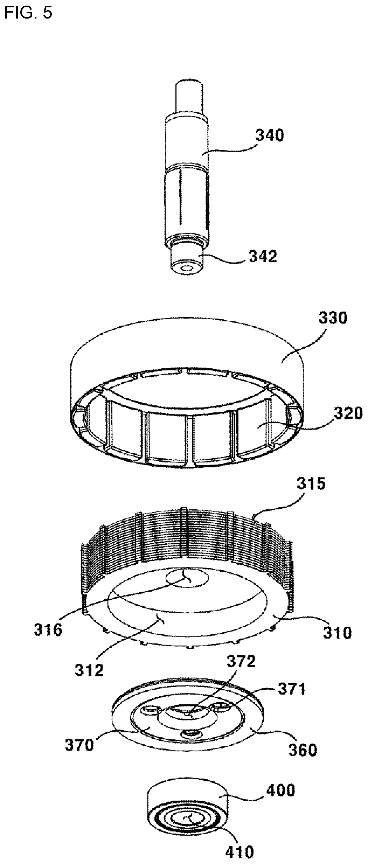

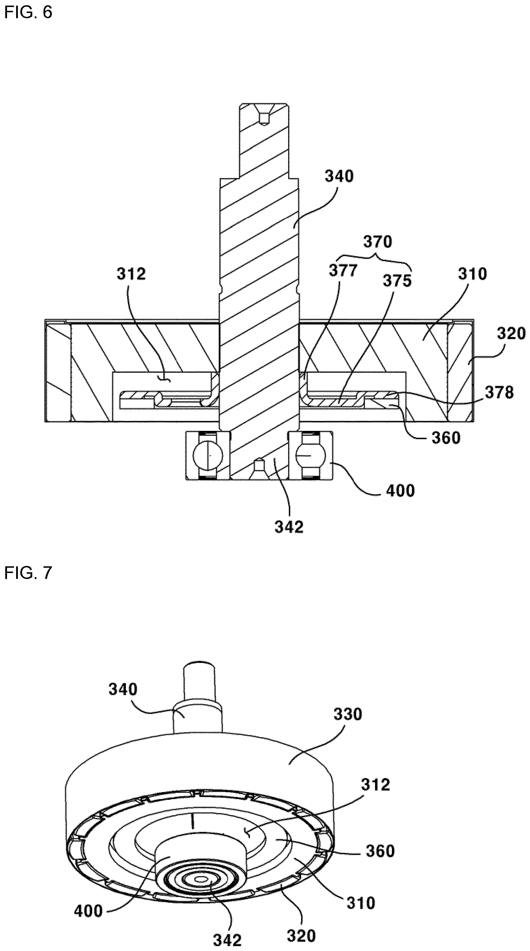

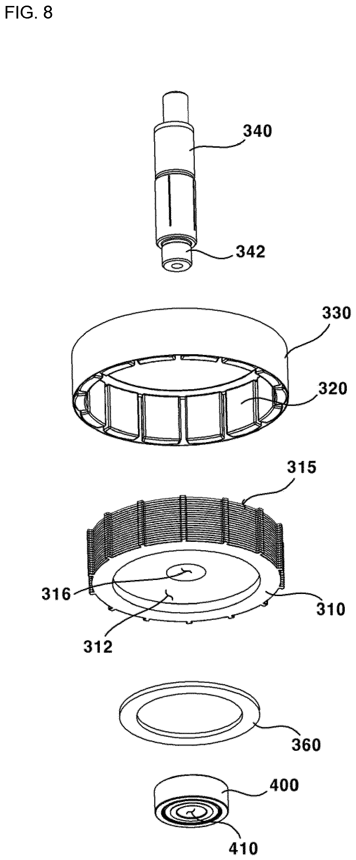

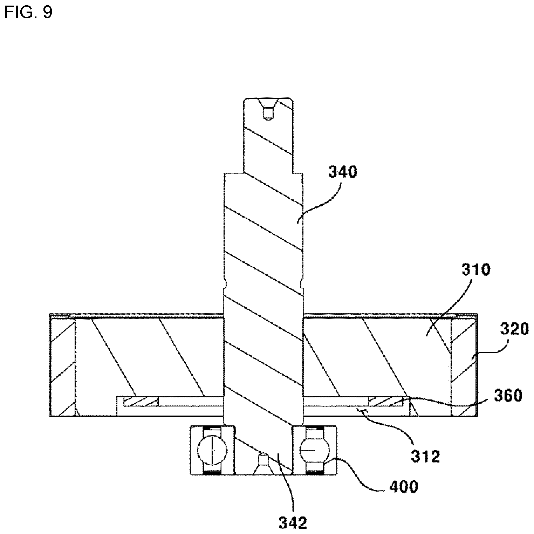

FIG. 1 is a perspective view illustrating an outer appearance of a motor according to an embodiment of the present invention; FIG. 2 is a cross-sectional view of a motor according to an embodiment of the present invention; FIG. 3 is an exploded perspective view of a motor according to an embodiment of the present invention; FIG. 4 is a perspective view of a rotor according to an embodiment of the present invention; FIG. 5 is an exploded perspective view of a rotor according to an embodiment of the present invention; FIG. 6 is a cross-sectional view of a rotor according to an embodiment of the present invention; and FIGS. 7 to 9 are diagrams illustrating a modified embodiment of a rotor and a sensor magnet according to an embodiment of the present invention.

Referring to FIGS. 1 to 6, the motor **10** according to an embodiment of the present invention may comprise a housing **100,** a stator **200,** a rotor **300,** a shaft **340,** and a bearing **400.**

The housing **100** may form an outer shape of the motor 10. The housing **100** may have a cylindrical shape with an open upper surface. A space **110** for accommodating the stator **200,** the rotor **300,** and the shaft **340** may be formed inside the housing **100.** An upper surface of the space **110** may be opened upward.

A cover (not shown) may be coupled to an upper surface of the housing 100. The space **110** may be closed by the coupling of the cover.

The connector terminal **190** may be formed on a side surface of the housing **100.** The connector terminal **190** may have a shape being protruded outward from the other region of an outer surface of the housing **100.** A space to which an external terminal (not shown) is coupled may be formed inside the connector terminal **190.** A pin **192** being electrically connected to the external terminal may be disposed inside the connector terminal **190.** Power may be provided to the motor **10** by electrical connection between the external terminal and the pin **192,** or an electric signal related to driving of the motor **10** may be transmitted or received.

The stator **200** may be disposed inside the housing **10.** The stator **200** may include a stator core **210,** an insulator **220,** and a coil **230.**

The stator core **210** may include a circular body and a plurality of teeth being protruded inward from an inner surface of the body. The plurality of teeth may be disposed to be spaced apart from one another along a circumferential direction.

The insulator **220** may be coupled to an outer surface of the stator core **210.** The insulator **220** may be disposed to surround an outer surface of the stator core **210.**

The coil **230** may be wound around an outer surface of the insulator **220.**

A bus bar **240** may be disposed on one surface of the stator core **210.** The coil **230** may be coupled to the bus bar **240.** A plurality of bus bars **240** may be provided to correspond to the polarity of the coil **230** and may be disposed to be spaced apart from one another along a circumferential direction.

The rotor **300** may be disposed inside the stator **200.** The rotor **300** may include a rotor core **310,** a magnet **320,** and a cover plate **330.**

The rotor core **310** may have a circular cross-sectional shape. A hole **316** to which the shaft **340** is coupled may be formed in the center of the rotor core **310.** A magnet coupling part **315,** to which the magnet **320** is coupled, may be formed on an outer surface of the rotor core **310.** The magnet coupling part **315** may have a groove shape being recessed inwardly than other regions. A plurality of magnet coupling parts **315** may be provided and may be disposed to be spaced apart from one another along a circumferential direction. Accordingly, a region between two magnet coupling parts **315** being disposed adjacent to each other may have a shape being protruded outward.

The magnet **320** may be coupled to an outer surface of the rotor core **310.** The magnet **320** may be disposed to face the coil **230.** The magnet **320** may be mounted on an outer circumferential surface of the rotor core **310.** The magnet **320** may be coupled to the magnet coupling part **315.** The magnet **320** may be coupled to the rotor core **310** by an adhesive. In this case, the adhesive may be disposed between an inner surface of the magnet **320** and a bottom surface of the magnet coupling part **315.** A plurality of magnets **320** may be provided and disposed to be spaced apart from one another along a circumferential direction of the rotor core **310.** An outer surface of the magnet **320** may be protruded outward from an outer surface of the rotor core **310** with respect to a radial direction.

The cover plate **330** may be disposed outside the rotor core **310.** The cover plate **330** may have a ring-shaped cross-sectional shape. The cover plate **330** may be disposed to cover the outer surface of the magnet **320** and the outer surface of the rotor core **310.** An adhesive may be disposed between the inner surface of the cover plate **330** and the outer surface of the magnet **320,** and between the inner surface of the cover plate **330** and the outer surface of the rotor core **310.**

With respect to an axial direction, the length of the cover plate **330** may correspond to the length of the magnet **320** or the length of the rotor core **310.**

The shaft **340** may be coupled to the center of the rotor **300.** The shaft **340** may be disposed to penetrate the hole **316** formed at the center of the rotor core **310.** Therefore, the shaft **340** may rotate together with the rotor **300** by the electromagnetic interaction between the magnet **320** and the coil **230.**

The rotor **300** may include a plurality of regions having different cross-sectional areas. For example, a bearing coupling part **342** being formed to have a cross-sectional area smaller than that of the other region may be disposed at one end of the rotor **300.**

A bearing **400** may be disposed in a region being spaced apart from the rotor **300** by a predetermined distance in an axial direction. The bearing **400** may support rotation of the rotor **300** and the shaft **340.** The bearing **400** may be disposed in a space inside the housing **100.** The bearing **400** may be a ball bearing having a ball being disposed between an inner wheel and an outer wheel. A hole **410** to which the shaft **340** is coupled may be formed at the center of the bearing **400.** A bearing coupling part **342** of the shaft **340** may be coupled to the hole **410.** Accordingly, the rotation of the shaft **340** may be supported through the bearing **400.**

The bearing **400** and the rotor **300** may be disposed to be spaced apart from each other by a predetermined distance along an axial direction. For example, an interval between the bearing **400** and the rotor core **310** may be 1 mm or more and 3 mm or less with respect to the axial direction.

Meanwhile, in order to detect the positions of the rotor **300** and the shaft **340,** the motor **10** may include a sensor magnet **360** and a sensor (not shown).

In detail, a groove **312** being formed to be recessed more than the other region may be formed on one surface of the rotor core **310** facing the bearing **400.** When the groove **312** is formed on a lower surface of the rotor core **310,** the bottom surface of the groove **312** may be disposed to be stepped upward than a lower surface of the rotor core **310.** The groove **312** may have a circular cross-sectional shape. The cross-sectional area of the groove **312** may be formed to be smaller than the cross-sectional area of the rotor core **310.** The length of the groove **312** may be equal to or less than 1/2 of the length of the rotor core **310** with respect to an axial direction.

The sensor magnet **360** may be disposed in the groove **312.**

The sensor magnet **360** may be coupled to the shaft **340** and the rotor core **320** through a sensor plate **370.** The sensor plate **370** may include a first region **377** being disposed to surround an outer surface of the shaft **340,** and a second region **375** being bent radially outward and extended from one end of the first region **377.** The first region **377** and the second region **375** may be disposed to be perpendicular to each other.

A hole **372** through which the shaft **340** penetrates may be formed at the center of the first region **377.** The shaft **340** may be press-fitted into the hole **372,** and accordingly, the shaft **340** may be disposed to penetrate the sensor plate **370.** One end of the first region **377** may be in contact with a bottom surface of the groove **312.**

The second region **375** may be formed to be extended radially outward from a lower end of the first region **377.** The second region **375** may be disposed perpendicular to the shaft **340.** The second region **375** may include an opening **371** penetrating from one surface to the other surface. The opening **371** may be disposed outside the hole **372.** A plurality of openings **371** may be provided and may be disposed to be spaced apart from one another along a circumferential direction of the second region **375.** For example, three openings **371** may be provided, and the three openings **371** may be disposed to form an equal interval of **120** degrees. In the process of assembling the motor **10,** a coupling force between the sensor magnet **360** and the sensor plate **370** may be identified through the opening **371.**

A sensor magnet coupling part **378** having a shape being recessed more than the other region may be formed on one surface of the second region **375** facing the bearing **400.** The sensor magnet coupling part **378** may have a groove shape. The bottom surface of the sensor magnet coupling part **378** may be disposed to be stepped more upward than the bottom surface of the second region **375.**

The sensor magnet **360** may be disposed on the sensor magnet coupling part **378.** The sensor magnet **360** may have a cross-sectional shape of a ring shape. One surface of the sensor magnet **360** may form a coplanar surface with one surface of the second region **375.** The bottom surface of the sensor magnet **360** may form a coplanar surface with the bottom surface of the second region **375.** The sensor magnet **360** may be coupled to the sensor plate **370** by an adhesive. The sensor magnet **360** may be spaced apart from the bottom surface of the groove **312** by a predetermined distance.

The sensor magnet **360** may rotate with the shaft **340** together with the sensor plate **370.**

A sensor (not shown) may be disposed inside the housing **100** being spaced apart from the sensor magnet **360.** For example, the sensor may be disposed at a lower portion of the housing **100** being spaced apart from the sensor magnet **360** in an axial direction. The sensor may be disposed on a surface of a printed circuit board (not shown), and may detect positions of the rotor **300** and the shaft **340** by detecting a magnetic field being changed according to rotation of the sensor magnet **360.**

In the motor **10** according to the present embodiment, the sensor plate **370** and the sensor magnet **360** may be disposed inside the groove **312** of the rotor core **310.** Accordingly, the length between the sensor plate **370** and the bearing **400** may be formed to be longer with respect to the axial direction. The length between the sensor magnet **360** and the bearing **400** may be formed to be longer than the length between the rotor core **310** and the bearing **400.** A lower surface of the sensor plate **370** or a lower surface of the sensor magnet **360** may be disposed to be stepped more upward than a lower surface of the rotor core **310.** The sensor plate **370** and the sensor magnet **360** may be disposed to be overlapped with the magnet **320** in a radial direction. The sensor plate **370** and the sensor magnet **360** may be disposed to be overlapped with the rotor core **310** in a radial direction.

According to the above structure, the length of the motor **10** can be reduced with respect to an axial direction by forming an arrangement region of the sensor magnet **360** through the groove **312** of the rotor core **310,** so that there is an advantage that the motor **10** can be miniaturized.

In addition, since the length of a shaft **340** is also reduced compared to the prior art and volume reduction of the rotor core **310** is accomplished due to the forming of a groove **312,** there are advantages that material cost is reduced and weight reduction is accomplished compared to the prior art.

In addition, since it is a structure in which a sensor plate **370** is supported by being in contact with the bottom surface of a groove **312,** there is an advantage of improved assemblability.

Meanwhile, referring to FIGS. 7 to 9, the sensor plate **370** may be omitted from the motor 10. In this case, only the sensor magnet **360** can be disposed in the groove **312** of the rotor core **310.**

In the present modified embodiment, by omitting the sensor plate **370,** the axial length of the groove **312** can be formed shorter than in the above-described embodiment. In addition, in the present modified embodiment, an upper surface of the sensor magnet **360** may be in contact with the bottom surface of the groove **312.** In this case, the upper surface of the sensor magnet **360** may be coupled to the bottom surface of the groove **312** with an adhesive.

In the above description, it is described that all the components constituting the embodiments of the present invention are combined or operated in one, but the present invention is not necessarily limited to these embodiments. In other words, within the scope of the present invention, all of the components may be selectively operated in combination with one or more. In addition, the terms "comprise", "include" or "having" described above mean that the corresponding component may be inherent unless specifically stated otherwise, and thus it should be construed that it does not exclude other components, but further include other components instead. All terms, including technical and scientific terms, have the same meaning as commonly understood by one of ordinary skill in the art unless otherwise defined. Terms used generally, such as terms defined in a dictionary, should be interpreted to coincide with the contextual meaning of the related art, and shall not be interpreted in an ideal or excessively formal sense unless explicitly defined in the present invention.

The above description is merely illustrative of the technical idea of the present invention, and those skilled in the art to which the present invention pertains may make various modifications and changes without departing from the essential characteristics of the present invention. Therefore, the embodiments disclosed in the present invention are not intended to limit the technical idea of the present invention but to describe the present invention, and the scope of the technical idea of the present invention is not limited by these embodiments. The protection scope of the present invention should be interpreted by the following claims, and all technical ideas within the equivalent scope should be interpreted as being included in the scope of the present invention.

## Claims

1. A motor comprising:
a housing;
a stator disposed inside the housing;
a rotor disposed inside the stator;
a shaft coupled to a center of the rotor; and
a sensor magnet disposed outside the shaft,
wherein a groove in which the sensor magnet is disposed is formed on one surface of the rotor.

2. The motor according to claim 1, including:
a bearing disposed to face one surface of the rotor and supporting a rotation of the shaft.

3. The motor according to claim 2,
wherein the rotor includes a rotor core and a magnet disposed on an outer surface of the rotor core,
wherein the groove is formed on one surface of the rotor core facing the bearing.

4. The motor according to claim 3,
wherein with respect to an axial direction, a length between the sensor magnet and the bearing is longer than a length between the rotor core and the bearing.

5. The motor according to claim 3,
wherein with respect to a radial direction, at least a portion of the rotor core is disposed to be overlapped with the sensor magnet.

6. The motor according to claim 3,
wherein with respect to an axial direction, a length of the groove is 1/2 or less than a length of the rotor core.

7. The motor according to claim 2,
wherein the sensor magnet includes one surface facing the bearing and the other surface facing the one surface, and
wherein the other surface of the magnet is in contact with a bottom surface of the groove.

8. The motor according to claim 2, including:
a sensor plate in which the shaft is coupled to a center thereof and the sensor magnet is disposed on one surface facing the bearing,
wherein the sensor plate is disposed inside the groove.

9. The motor according to claim 8,
wherein the sensor plate includes a first region disposed outside the shaft, and a second region extended outward in a radial direction from one end of the first region and perpendicular to the first region, wherein the sensor magnet is disposed on a surface of the second region.

10. The motor according to claim 9,
wherein the surface of the second region facing the bearing and the surface of the sensor magnet form the same plane.
